# EUROPEAN PATENT SPECIFICATION

(11) **EP 2 483 028 B1**
(45) Date of publication and mention of the grant of the patent: **27.05.2020**
(21) Application number: 10769048.9
(22) Date of filing: 01.10.2010
(51) Int. Cl.: B23H 9/10

(54) **ROTARY STRUCTURES**
DREHSTRUKTUREN
STRUCTURES ROTATIVES

(30) Priority: 02.10.2009 GB 0917317
(43) Date of publication of application: 08.08.2012
(73) Proprietor: Bladon Jets Holdings Limited, Castletown, Isle of Man, IM9 1LA (GB)
(72) Inventor: NOBLE, Alan, Shropshire SY12 0LT (GB); BLADON, Christopher, Shropshire SY12 0LT (GB)
(74) Representative: Somerville, Andrew Edward
(86) International application number: PCT/GB2010/051642
(87) International publication number: WO 2011/039546

(56) References cited:
- EP-A1- 0 327 657
- EP-A1- 0 426 233
- EP-A2- 1 430 983
- EP-A2- 1 652 611
- DE-A1- 1 540 723
- DE-A1- 10 255 455
- JP-A- 59 001 125
- US-A1- 2006 169 675
- US-A1- 2007 271 785

## Description

This disclosure relates to the production of components, particularly fans, turbines and guide vanes, for gas turbine engines and other applications employing turbines or similar static or rotary structures for guiding the passage of fluids.

In our prior applications WO 2004/2076111 and WO 2006/027608 we described the potential advantages of small gas turbine engines over other forms of engine but also described the serious engineering obstacles faced in attempting to reduce the size of larger scale engines. In particular, we described the immense practical difficulties of forming a closely spaced radial array of blades or vanes from a single blank.

WO 2004/076111 and WO 2006/027608 both disclose methods for forming such components using electro-discharge machining to form the required shapes. The Applicant has established that this technique can successfully be used to create small scale turbines discs with overlapping aerofoil-shaped blades for use e.g. in small gas turbine engines. However, these techniques are relatively time consuming and it is an aim of the present disclosure in at least its preferred configurations to improve upon these techniques.

US 2007/271785 A1 discloses: overlapping twisted radial aerofoil blades or vanes which are formed on a compressor rotor or turbine disk or the like by electro-discharge machining with a curved tool electrode which is in the form of an elongate and substantially rigid element other than a wire which is turned by a tool holder as it is advanced on a helical path to form the inner surface of each blade or vane with the outer curve of the electrode, or the outer surface of each blade or vane with the inner curve of the electrode, the disk being indexed to a next rotary position after each blade surface is machined.

EP 0 327 657 A1 discloses: a method of making a bladed rotor with blades in sheet construction arranged on the outer periphery of a rotor disc, the gaps between the blades being rough-machined in the disc-shaped blank and then the blades being machined by electrochemical machining (ECM) by means of forming cathodes reaching into the gaps until the finished contour of the blades is obtained.

The present disclosure provides a method in accordance with claim 1 or 2.

The disclosure extends to an apparatus for contactlessly machining a workpiece having a face and an edge, comprising means for mounting said workpiece, a tool configured to remove material from said workpiece by inducing a change of state therein by its proximity to the workpiece, the apparatus being configured to advance the tool in a direction towards the face of the workpiece to remove material from said face.
Thus it will be seen by those skilled in the art that in contrast with the methods taught in the Applicant's prior disclosures, whereby the blank is machined by an elongate tool spanning the edge of the blank is advanced towards that edge, the tool is instead advanced towards the face of the blank. This has been found to give several advantages over prior techniques. One advantage is that it allows a required shape to be formed, at least in some configurations, with a simple combination of rotating the workpiece relative to the tool and advancing the tool towards the workpiece.

The disclosure is particularly suited to use in the production of a disc having a radial array of overlapping blades or vanes either directly or as a preliminary stage in said production. Configurations of the disclosure permit complex, e.g. aerofoil shapes, to be imparted to the resulting blades/vanes.

Where reference is made herein to forming blades/vanes, this is not limited to forming the final shape of said blades/vanes; it should be understood to encompass the forming of structures in a workpiece or blank from which the final blade/vane shape can be formed with final machining.

The disclosure also allows a greater surface area of the tool to be at the required separation from the material of the workpiece to induce the change of state. That is, an increased 'machining' surface area is provided. This translates into more rapid removal of the material and thus allows the production time to be reduced. More particularly, as will be explored in greater detail below, the disclosure lends itself conveniently to tool configurations which form more than one blade or vane on a given workpiece simultaneously.

The workpiece is preferably circular or has a circular envelope. In some configurations workpiece is a solid blank. For example the blank may refer to a be solid, squat-cylindrical disc - i.e. one having a thickness in the axial direction less than its diameter, preferably substantially less e.g. less than 20 % of the diameter, or less than 10 % of the diameter. This is typically what will be used as the starting point as it is easy to produce or obtain. However it is not essential that this form of blank is used. In particular in certain configurations of the disclosure multiple machining operation are carried out. Here for the subsequent machining operations the workpiece will be a partially-formed disc rather than a virgin blank.

In one set of configurations, a unitary tool is provided having shaped slots therein, at least part of which corresponds to the desired formed shape of the workpiece after machining. In this case the tool is effectively a physical inverse of the shape it is designed to produce in the workpiece. In this set of configurations the "machining area" - that is the surface area of the tool which is in the correct proximity to the workpiece to cause the required change of state - is very high since blades or vanes can be formed across substantially or entirely their whole radial height. Clearly this large machining area is highly beneficial in terms of the speed with which a bladed disc can be produced. In some applications there may be a challenge in ensuring adequate removal of eroded metal from between the workpiece and the tool.

In another set of configurations, the tool comprises an essentially two-dimensional surface (its thickness corresponding to or being less than, the spacing between the blades/vanes). In another set of preferred configurations, the tool comprises at least one elongate member. It will be appreciated that since in accordance with the disclosure the tool is advanced towards a face of the workpiece, such an elongate tool may only be supported in a tool holder at one end. The support may be at the radially outer end of the tool if a disc is being formed with a conventional central hub; alternatively a support may be at the radially inner end if the blades/vanes are instead supported on a circumferential rim and project inwardly. Although advantages can be realised with only a single tool member, preferably a plurality of circumferentially spaced tool members is provided to allow the simultaneous formation of a plurality of blades/vanes on a single disc. In one set of configurations, a tool member is provided for half of the blades/vanes on the disc - i.e. the tool members are distributed around the half the circumference of the eventual disc. This is clearly beneficial in allowing the rapid machining of an entire disc.

So far various configurations of the disclosure have been described which allow the efficient machining of a disc having a closely spaced array of radially extending blades or vanes. The Applicant has also realised that further gains in manufacturing efficiency can be achieved by employing multiple tools which permit multiple such discs to be machined simultaneously. The "face on" machining of the present disclosure lends itself particularly to this since it allows a vertical stack of workpieces to be machined by an interleaved vertical stack of tools. Thus, a preferred configuration of the method of the disclosure comprises simultaneously machining a plurality of workpieces arranged in a stack extending in the direction of advancement of the tools. The disclosure extends to a composite tool comprising a plurality of tool members for machining a plurality of workpieces arranged such that the tool members are advanced towards the workpieces along a common axis. It is preferred in such configurations that the composite tool comprises tool members arranged around a semi-circle to allow the easy radial extraction of the tool members relative to the blanks whilst still maximising the number of blades/vanes which can be formed simultaneously. Two such composite tools could be used on either side of the stack of workpieces in order to machine them in full simultaneously, or the composite tool and stack of workpieces may be rotated by 180º relative to one another to machine one half of each workpiece at a time.

In accordance with the disclosure thus far described, the tool is advanced towards a face of the workpiece rather than towards its edge. The can allow for rapid machining of a plurality of blades or vanes simultaneously and thus significantly increase production efficiency to enable practical manufacture of turbine or stator discs for use in small gas turbine engines and the like on a commercial scale.

However, the Applicant has recognised that meeting the dual objectives of efficiency and production quality might best be achieved by a two stage process in which the face machining approach described above is used to remove a quantity of material from a blank but with a second, different tool used to form the final shape. This should be contrasted with the practice already mentioned in the prior art of "finishing" a formed blade in which a tool might be used in a second pass to tidy up parts of the blade shape such as the root, leading edge etc.; in the configurations being discussed here the second tool is used actually to give shape to the blade, whereas the first tool is used simply to remove a certain amount of material which facilitates the passage of the second tool. Of course more than two stages could be used - either repeating one of the aforementioned stages or using a different tool.

The disclosure provides a method of forming a radial array of overlapping blades or vanes in accordance with claim 1 or 2 comprising a first stage of advancing a tool towards a workpiece in a direction towards the face of the workpiece to remove material from said workpiece by inducing a change of state of the material by proximity of said tool; and a second stage of removing further material from said workpiece to leave said blades or vanes, this removal also being effected by a change of state of the material induced by proximity to a second advancing tool, said second stage comprising the step of advancing said second tool in a direction towards the edge of the workpiece. Such a two stage process has been found in some circumstances to maximise production efficiency as well as maximising the finished quality of the resulting bladed discs. Although two tools are mentioned in accordance with the aspect of the disclosure set out above, this should not be considered to exclude the provision of additional tools and/or machining stages. The second tool recited above could take any appropriate form. For example, a wire or non-wire tool such as those disclosed in WO 2004/076111 or WO 2006/027608 could be employed.

However, the Applicant has devised a different type of tool which has been found to be beneficial in this context and which also has potential applications in other processes. Accordingly, the second tool is mounted to a tool holder on one side only, with the opposite side of the tool being unsupported. Such a form of tool allows the whole tool to be advanced radially into the workpiece in, or to form, a gap between adjacent blades/vanes. At least two sides of the tool correspond in form to at least part of the desired finished forms of the two respective blade/vane facing surfaces on either side of the gap. This allows such a tool simply to be advanced along a radius of the workpiece to form the final shape of the two blade/vanes on either side of it. They may be formed simultaneously, but more typically the workpiece is twisted about its axis between insertion and withdrawal of the tool.

Such a tool provides a tool for contactlessly machining a radial array of overlapping blades or vanes in a workpiece, said tool being adapted to be supported at first side thereof opposite a second, unsupported side, the tool further comprising third and fourth side surface regions extending between said first and second sides, said third side surface region having a form conforming to at least part of a final form of a surface of one of said blades or vanes. This aspect of the disclosure extends to a method of forming a radial array of overlapping blades or vanes comprising advancing such a tool along a radius of said workpiece.

Preferably the length of the tool from the first to second sides is greater than its maximum width between said third and fourth side surface regions.

When viewed from a yet further aspect the disclosure provides a tool for contactlessly machining a radial array of overlapping blades or vanes in a workpiece, said tool comprising opposite first and second ends, the tool further comprising third and fourth side surface regions extending between said front and rear ends, at least one of said side surface regions having a form conforming to at least part of a final form of a surface of one of said blades or vanes, wherein the length of the tool from the first to second surfaces is greater than its maximum width between said side surface regions. This aspect of the disclosure also extends to a method of forming a radial array of overlapping blades or vanes comprising advancing such a tool along a radius of said workpiece.

In preferred configurations, the fourth side surface regions corresponds to the desired final surface form of the blade/vane facing that conforming to the third surface region. In other words, the tool can be thought of as a plug which fits in the gap between adjacent blades/vanes in the finished bladed disc (albeit allowing for small rotational movement of the workpiece).

The tool is supported so that the second, unsupported surface is the leading surface of the tool, i.e. so that the axis of the tool passing through the first and second surfaces is approximately parallel to a radius of the workpiece. In other configurations the aforementioned axis of the tool is approximately parallel to the rotation axis of the workpiece.

The tool holder could comprise just a single tool but preferably it comprises a series of tools, typically identical but not essentially so. This again allows a series - e.g. a stack - of workpieces to be machined simultaneously. The relatively large surface area of the tools allows a large electrical current to be passed, but there is no significant problem arising from fouling by eroded material. The tool(s) could be integrally formed with the holder - e.g. by machining or casting, or could be separate and preferably removable to permit replacement thereof.

In one set of preferred configurations the workpieces are mounted in a vertically-spaced stack on a common shaft. This permits the shaft to be rotated to permit machining of a blade leading edge during insertion and a facing blade trailing edge during extraction (as is preferred; and for indexing between one pair of blades and the next.

The tool in accordance with the foregoing aspects of the disclosure could be shorter than the full radial height of the finished blades/vanes but preferably it is at least as high or higher. In some configurations the leading face of the tool, that which is closest to the workpiece on initial approach, is shaped to give a desired form to the root region, e.g. it is radiussed.

The tool need not take the form of a plug; it could, for example, extend around a blade or vane either partially or fully. Indeed it could extend around multiple blades or vanes. The radial height could be very small such that the tool is essentially a two-dimensional lamina.

It will be appreciated by those skilled in the art that the tool described above will tend to have a solid or block form rather than being elongate such as a wire.

However, it is not essential for the tool to be solid and it is envisaged that a hollow tool, e.g. one open one on side and attached to a tool holder inside the tool, could be used.

In one set of configurations the tools described above can be used on their own to form the blades/vanes from a fresh blank, with one or more passes. In another set of configurations the tools described above are employed after removal of some of the material either by a conventional tool and process or, more conveniently, using the face advancing technique described above i.e. using the two stage process devised by the Applicant and disclosed herein.

In preferred configurations of all aspects of the disclosure an electrical potential is applied across the workpiece and tool such that material is removed from the workpiece through erosion resulting from electrical discharge between the tool and workpiece when they are sufficiently close to one another, in other words an electro-discharge machining process is used. However this is not essential as other contactless machining techniques could be employed which produce erosion of the workpiece through intense local heating, or other otherwise induce a change of state, such as electro-chemical machining.

In accordance with all aspects of the disclosure described herein, the tool or tool members could be made from any suitably conductive materials. In one set of configurations the tool or tool members is/are made of copper or an alloy comprising copper. In another set of configurations, the tool/tool members could be made from graphite.

The workpiece could be of any suitably electrically conductive material. In particular it will be appreciated that the disclosure may be used with workpieces made from materials that could not be satisfactorily machined using traditional machining techniques such as abrading and cutting. In a set of presently preferred configurations the workpiece is made of aluminium or an alloy containing aluminium.

The disclosure disclosed herein extends to turbines discs and stator discs produced using the techniques disclosed herein and to gas turbine engines incorporating one or more of these.

Although the disclosures disclosed herein uniquely allow the large scale production of turbine or stator discs with aerofoil section blades/vanes which are very small, i.e. less than 30 cm in diameter, preferably less than 20 cm in diameter, the disclosure is not limited to such miniature components and can be beneficially employed to produce larger turbines or stators or indeed parts for these such as assemblies of blades/vanes which can be assembled into a turbine or stator disc but still without the requirement to fit and secure individual blades/vanes.

Certain preferred configurations of the disclosure will now be described, by way of example only, with reference to the accompanying drawings in which:
- Fig. 1: is a perspective view of a composite tool embodying one aspect of the disclosure;
- Fig. 2: is a view of a stack of blank discs prior to machining using the tool of Fig. 1;
- Fig. 3: is a view of the tool of Fig. 1 being used to machine the stack of blanks of Fig. 2;
- Fig. 4: shows the stack of blanks after they have been machined;
- Fig. 5: is a perspective view of another tool embodying the disclosure together with the bladed disc which it is able to produce;
- Fig. 6: is a view of the tool of Fig. 5 as machining of the bladed disc is in progress;
- Fig. 7: is a perspective view of a further tool embodying the disclosure;
- Fig. 8: is a view showing the tool of Figs. 7a and 7b approaching a bladed disc for machining;
- Fig. 9: is a view similar to Fig. 8 showing the machining of the disc in progress; and
- Fig. 10: is a perspective view of a machining operation according to another configuration of the disclosure.

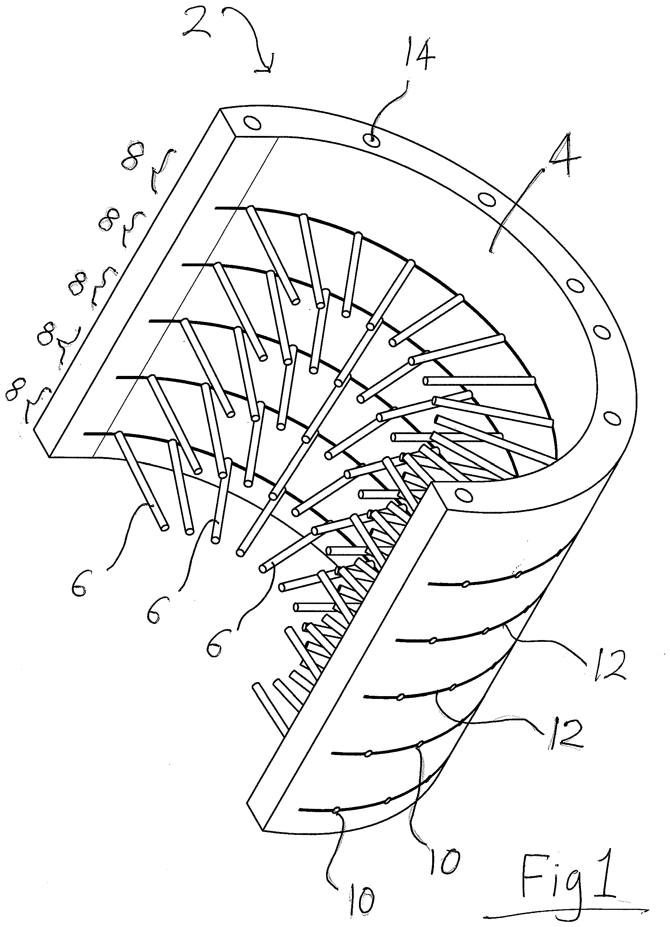

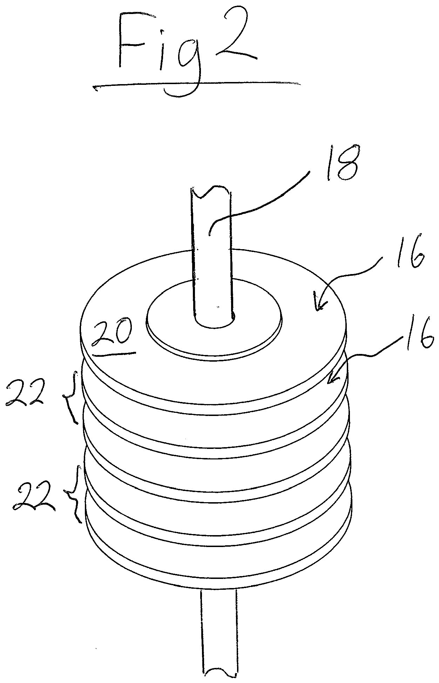

Fig. 1 shows a composite tool 2 for electro-discharge machining of a vertical stack of disc-shaped blanks such as are shown in Fig. 2. The tool 2 comprises a semicircular cylindrical shell support member 4 to which are fixed an array of elongate tool members 6. It will be noted that the tool members 6 are arranged into five distinct rows 8, each of which comprises a set of thirteen radially-extending tool members 6 distributed around the circumference of the support member 4. The individual tool members 6 are held in the support member 4 by being clamped in notches 10 formed in circumferentially extending slots 12 corresponding to the respective rows 8. A series of vertically extending bores 14 pass through the wall of the support member 4 to allow the passage of a series of bolts which provide a clamping force. This arrangement allows for the easy removal and replacement of individual tool members 6. In use, the tool 2 is mounted in a computer-numerically- controlled (CNC) machine.

Although the individual tool members 6 are shown as being straight and extending directly radially, this is not essential - they could be shaped as appropriate to give a desired shape to the blades and/or they could extend at an acute angle (horizontally or vertically) to the radial direction.

Fig. 2 shows a vertical stack of disc-shaped blanks 16 prior to being machined by the tool 2 of Fig. 1 . The blanks 16 are circular solid discs of aluminium alloy and may have an exemplary diameter of 76 mm and a thickness of 4 mm. Each disc has a central hole to allow it to be mounted on a common mounting shaft 18. The mounting is such as to establish a good electrical connection between the blanks 16 and the shaft 18. They are mounted in a vertically-separated stack so that the separation of respective upper faces 20 of the blanks is slightly less than the vertical separation of the respective rows 8 of tool members 6 in the tool 2 shown in Fig. 1. The gaps 22 between the respective blanks 16 are slightly larger than the thickness of the tool members 6.

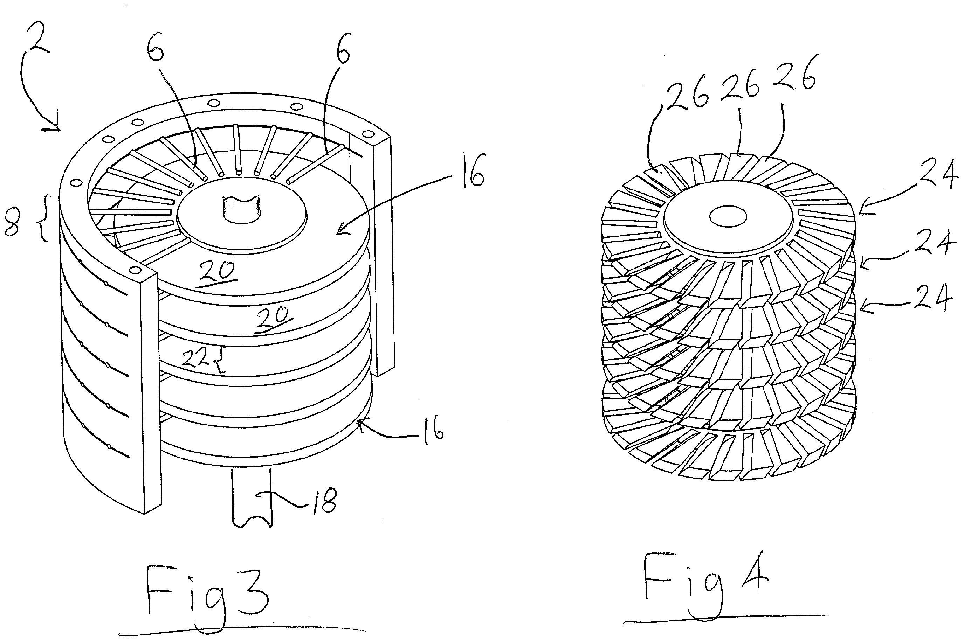

As may be appreciated from Fig. 3, in operation the stack of blanks 16 is brought into position for machining by advancing them radially towards the tool member 2 until the support shaft (the upper part of which is omitted for clarity) is coaxial with the axis of the cylindrical tool support housing 4 (or vice versa) so that the rows 8 of individual tool members 6 pass into the gaps 22 between the respective blanks.

To begin machining of the blanks 16, they are immersed in a hydrocarbon-based or synthetic dielectric fluid. One side of an electrical potential is applied to the shaft 18 supporting the blanks 16, and therefore to the blanks themselves, and the other side is applied to the tool 2. The voltage of the electrical potential applied can be chosen to suit the circumstances, the required finish etc. In one example a voltage of 40 volts could applied. It has been found that with a 3 amp power supply, this allows the tool to erode the blank at a rate of 2 mm per minute. The shaft 18 is therefore advanced at this rate in a vertical direction relative to the tool 2 (of course the tool could be moved as well or instead).

When the individual tool members reach a critical distance from the faces 20 of the blanks, the resulting electrical discharge across the gap between the tool members 6 and the blank face 20 will begin to erode a corresponding groove in the face 20 of the blank. Since there are thirteen individual tool members 6 in each row 8 of the tool, thirteen separate grooves will be machined simultaneously in the face 20 of each blank. It will also be appreciated that discharge machining can take place along a significant proportion of, or substantially all of, the length of each tool member 6. Relative vertical movement between the blank support shaft 18 and the tool 2 continues, ensuring that the grooves in the faces of the blanks continue to deepen. As the vertical advancement continues, a relative rotational movement between the blanks 16 and the tools 2 about their common axis is also executed. This gives "undercut" grooves.

The operation is continued until the tool members 6 have eroded a gap completely through the respective blanks and have emerged into the gap 22 on the other side of the respective blank.

The initial machining operation leaves the blank with a half-circumferential array of closely spaced, overlapping blocks which may have a crude blade shape. At this point, the operation can be repeated with the reverse relative vertical movement but with slightly different rotational movement in order to have the tool members 6 machine the opposing faces of the blades. Once machining of one half of the blanks 16 has been completed, the blanks and the tools 2 may be rotated through 180<Q> to allow the other half to be machined. Alternatively, a mirror image tool may be advanced on the other side of the blanks to form a complete circle and thus allow machining of the entire blanks at the same time. Subsequent machining operations can be carried out if required - e.g. to remove material between the initial two cuts.

The resulting workpieces 24 are shown in Fig. 4. As mentioned above these comprise a circumferentially array of closely-spaced, overlapping blocks 26 which have a crude blade shape.

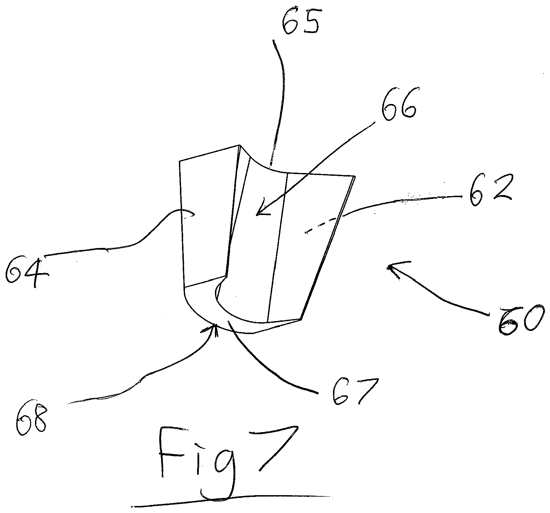

Thus it can be seen that the tool 2 shown in Fig. 1 allows the rapid machining of five blanks simultaneously and of either half of or all of the blades on a given blank simultaneously. This gives the potential for a significant increase in the production efficiency of the machining process as compared to the techniques set out in WO 2004/076111 and WO 2006/027608 in which only a single groove in a single blank is machined at a time. This technique may be used, possibly a plurality of times, either with the same tool or with a similar tool bearing different individual tool members. However, in the configuration described here a subsequent machining operation is carried out with a different type of tool as will be described in greater detail hereinbelow with reference to Figs. 7a to 10.

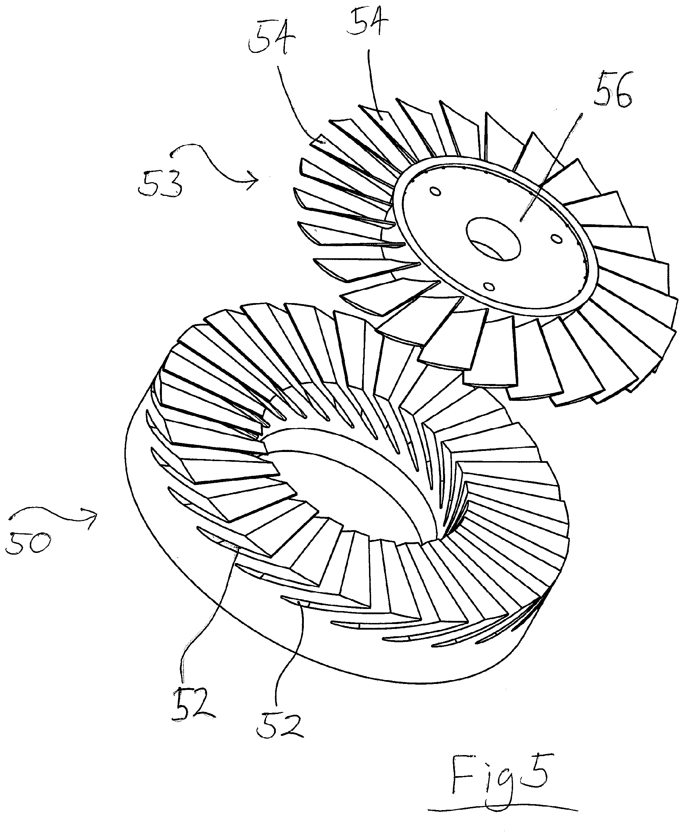

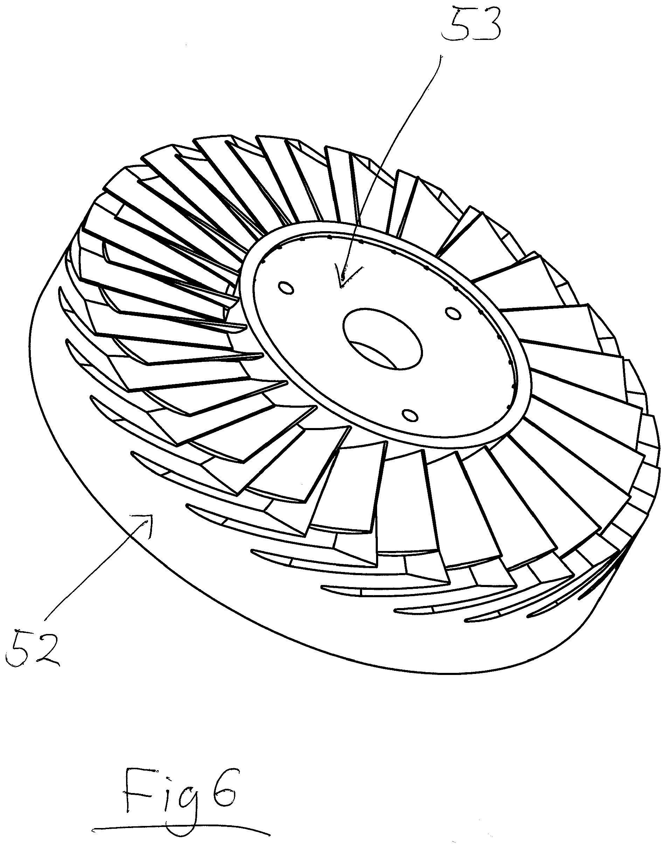

Fig. 5 shows an alternative configuration of the disclosure. In this configuration, the blank is machined using a single unitary tool member 50 which has a series of angled, generally radially-extending slots 52 formed in its upper face. As in the previously described configuration, this tool 50 is also used to machine a disc- shaped blank from one face of the blank and is twisted relative to the blank at the same time as advancing along their common axis in order to machine a bladed disc 53 having a closely spaced, overlapping circumferential array of blades 54 which extends from a hub 56. As will be appreciated particularly from the in-progress view of Fig. 6, the tool 50 is the physical inverse of the desired resultant shape of the bladed disc 53 so that the shape of the slots 52 is the precise shape of the resulting blades 54. It will be appreciated that use of this tool is straightforward and it can allow very rapid production of a bladed disc, although does not lend itself so well to the simultaneous machining of a plurality of discs.

Fig. 7 shows a perspective view of a further tool member 60 which can be used to provide an accurate finished shape to the blades on discs produced by the tools shown in Figs. 1 and 5. The tool 60 has a first side 62 on which it is supported in a tool holder (not shown) in use. The first side 62 may be formed with a suitable feature - such as a dovetail - to allow it to slot into the tool-holder, or it could be formed as in integral part of the tool-holder. The second side 64, which is approximately opposite the first side 62, is unsupported. Neither the first nor second sides 62, 64 need be planar and they need not be parallel with one another. As an alternative the tool could be supported at the top 65 with the bottom 67 being unsupported.

Extending between the first side 62 and the second side 64 are two side surface regions 66 and 68. These correspond in shape to the desired finished surface shape of the blades 70. In particular, the concave side surface region 66 corresponds to the convex face 70a of the blades and the convex face 68 of the tool corresponds to the concave face 70b of the blades. Although not shown the bottom of the tool 67 could correspond in shape to the desired surface of the hub at the blade root region.

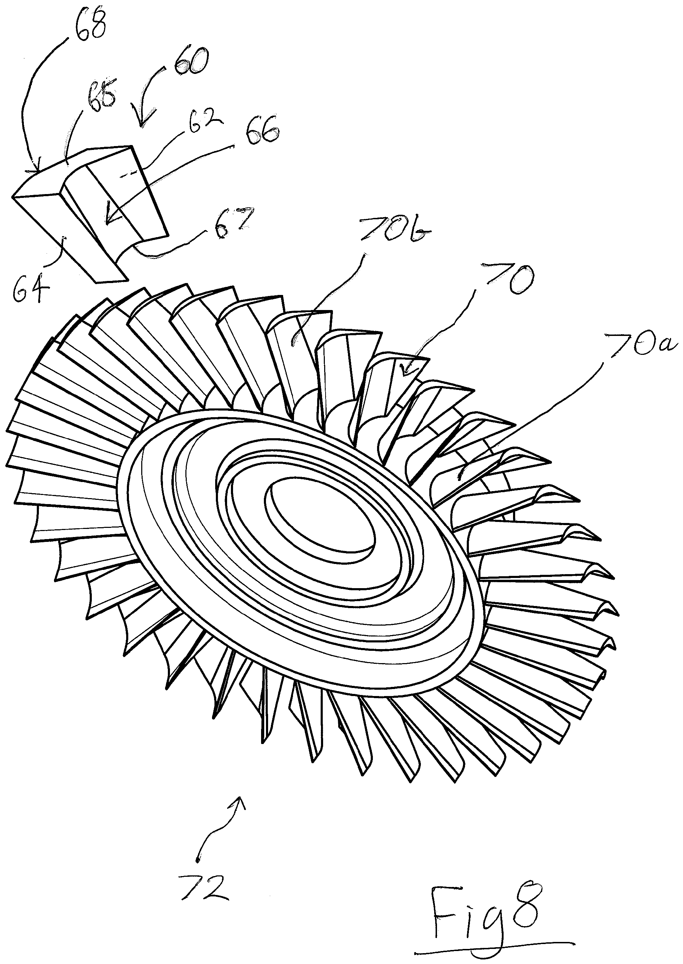

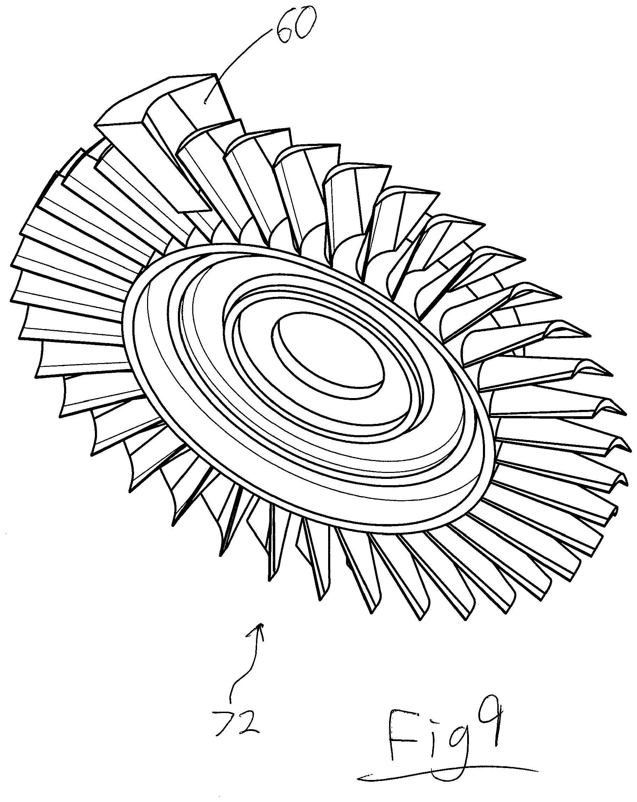

The tool 60 shown in Fig. 7 may be used to produce a desired blade shape from the crude blocks 26 of the partly-machined workpiece of Fig. 4 as will be shown with reference to Figs. 8 and 9. As the tool 60 is advanced radially towards the partially finished bladed disc 72 (which is in fact shown just after machining has been completed), the convex face 70a of one blade is machined as the tool advances into the gap. Thereafter when the disc 72 is rotated slightly on its axis and as the tool 60 is withdrawn, it machines the concave face 70b of the adjacent blade. This produces the emergent blade shape shown in Figs 8 and 9. Such a shape cannot easily be achieved simply by using the tools shown in Figs. 1 and 5.

It will be seen therefore that the straightforward finishing of the blades 70 on the bladed disc 72 can be achieved simply by advancing the tool 60 radially into the gaps between respective blades 70 which are formed by one of the prior-described techniques and rotating the disc 70 at the appropriate point. Once one pair of blade surfaces has been machined, it is simply necessary to withdraw the tool, index the workpiece disc 72, and then advance the tool 60 again into the next gap. This allows both rapid and accurate finishing of the blade whilst permitting the formation of complex blade forms without the need for repeated changes of the tool.

It is also possible to machine the finished blades from a solid blank using a tool similar to that described with reference to Figs. 8 and 9.

Clearly the particular form of the tool 60 will be dictated by the desired finished shape of the blades. Whilst the tool is depicted in these configurations as extending substantially the full radial height of the blades 70, this is not essential and it could be deeper or significantly shallower than this.

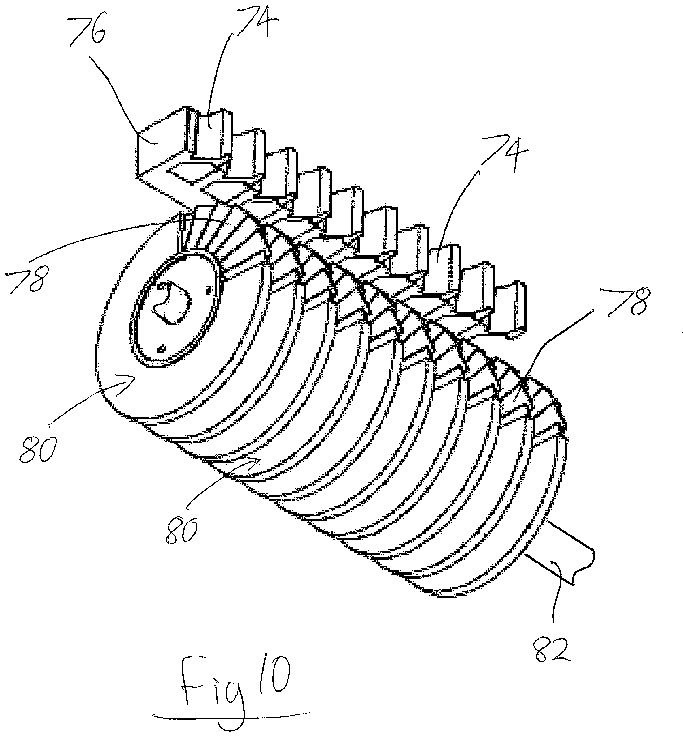

Fig. 10 shows another configuration of the disclosure. This has a row of ten tools 74 individually mounted in an elongate tool-holder 76. The tools 74 are similar to, but not exactly the same shape as, the tool described with reference to Figs. 7 to 9. Each tool 74 is used to machine two facing edges of adjacent blades 80 from a virgin blank 80 in a similar manner to that described for the previous configuration, namely advancing the tool 74 towards the respective blank, rotating the blank and withdrawing the tool, then indexing the blank to form the next pair of surfaces. The difference in this configuration is that a stack of ten blanks 80 mounted in a spaced relationship on a common shaft 82 can be machined simultaneously by advancing the tool holder 76 in a direction parallel to the axis of the shaft 82, which brings all ten tools 74 into proximity to the respective blanks 80. The blanks 80 can be rotated and indexed together via the shaft 82. Instead of advancing the tool-holder 76 towards the blanks, the shaft 82 could moved. Conveniently the tool-holder 76 can be fitted to an automated tool changer which allows different tolls to be used in a multi-stage process or allows the replacement of worn tools without needing to interrupt production.

Thus it will be seen that the preferred configurations of the disclosure allow the rapid and efficient production of an integral bladed disc from a solid blank using a one- or two-stage electro-discharge machining process.

## Claims

1. A method of forming a radial array of overlapping blades (72) comprising:
a first stage of advancing a tool (6) towards a workpiece (16) in a direction towards the face (20) of the workpiece to remove material from said workpiece by inducing a change of state of the material by proximity of said tool to produce a partially finished bladed disc (24); and
a second stage of removing further material from said workpiece to finish said blades, this removal also being effected by a change of state of the material induced by proximity to a second advancing tool (60), wherein said second advancing tool comprises:
a first side (62) opposite a second side (64) and third (66) and fourth (68) side surface regions extending between said first and second sides; and a top (65) and a bottom (67), wherein: either said first side is adapted to be supported with said second side being unsupported or said top (65) is adapted to be supported with said bottom (67) being unsupported; said third side surface region is concave and corresponds to a desired convex face (70a) of the blades and said fourth side surface region is convex and corresponds to a desired concave face (70b) of the blades; and said bottom corresponds in shape to a desired surface of a hub at a blade root region of the workpiece,
said second stage comprising:
machining the convex face (70a) of one blade as said second advancing tool is advanced radially towards the partially finished bladed disc into a gap between respective blades;
rotating the disc slightly on its axis; and
machining the concave face (70b) of an adjacent blade as said second tool is withdrawn.

2. A method of forming a radial array of overlapping blades (72) in a workpiece (16) comprising:
providing a tool (60) comprising:
a first side (62) opposite a second side (64) and third (66) and fourth (68) side surface regions extending between said first and second sides; and a top (65) and a bottom (67), wherein: either said first side is adapted to be supported with said second side being unsupported or said top (65) is adapted to be supported with said bottom (67) being unsupported; said third side surface region is concave and corresponds to a desired convex face (70a) of the blades and said fourth side surface region is convex and corresponds to a desired concave face (70b) of the blades; and said bottom corresponds in shape to a desired surface of a hub at a blade root region of the workpiece; and
advancing the tool along a radius of said workpiece to form a gap between adjacent blades and simultaneously form the concave and convex faces of respective blades.

## Patentansprüche

1. Verfahren zum Ausbilden einer radialen Anordnung einander überlagernder Schaufeln (72), Folgendes umfassend:
eine erste Stufe des Vorrückens eines Werkzeugs (6) in Richtung eines Werkstücks (16) in eine Richtung zur Stirnseite (20) des Werkstücks, um Material vom Werkstück zu entfernen, indem durch die Nähe des Werkzeugs eine Zustandsänderung des Materials verursacht wird, um eine halbfertige Schaufelscheibe (24) herzustellen; und
eine zweite Stufe des Entfernens weiteren Materials vom Werkstück, um die Schaufeln zu vollenden, wobei dieses Entfernen ebenfalls durch eine durch die Nähe des Werkzeugs (60) verursachte Zustandsänderung des Materials umgesetzt wird, wobei das zweite vorrückende Werkzeug Folgendes umfasst:
eine erste Seite (62), die einer zweiten Seite (64) entgegengesetzt ist, und einen dritten (66) und vierten (68) Seitenflächenbereich, die sich zwischen der ersten und zweiten Seite erstrecken; und eine Oberseite (65) und eine Unterseite (67), wobei: entweder die erste Seite dazu eingerichtet ist, abgestützt zu werden, wobei die zweite Seite nicht abgestützt wird, oder die Oberseite (65) dazu eingerichtet ist, abgestützt zu werden, wobei die Unterseite (67) nicht abgestützt wird; wobei der dritte Seitenflächenbereich konkav ist und zu einer gewünschten konvexen Fläche (70a) der Schaufeln passt und der vierte Seitenflächenbereich konvex ist und zu einer gewünschten konkaven Fläche (70b) der Schaufeln passt;
und die Unterseite in der Form zu einer gewünschten Fläche einer Nabe an einem Schaufelfußbereich des Werkstücks passt,
wobei die zweite Stufe Folgendes umfasst:
Bearbeiten der konvexen Fläche (70a) einer Schaufel, wenn das zweite vorrückende Werkzeug radial in Richtung der halbfertigen Schaufelscheibe in einen Spalt zwischen entsprechenden Schaufeln vorgerückt wird;
leichtes Drehen der Scheibe auf ihrer Achse; und
Bearbeiten der konkaven Fläche (70b) einer angrenzenden Schaufel, wenn das zweite Werkzeug zurückgezogen wird.

2. Verfahren zum Ausbilden einer radialen Anordnung einander überlagernder Schaufeln (72) in einem Werkstück (16), Folgendes umfassend:
Vorsehen eines Werkzeugs (60), Folgendes umfassend:
eine erste Seite (62), die einer zweiten Seite (64) entgegengesetzt ist, und einen dritten (66) und vierten (68) Seitenflächenbereich, die sich zwischen der ersten und zweiten Seite erstrecken; und eine Oberseite (65) und eine Unterseite (67), wobei: entweder die erste Seite dazu eingerichtet ist, abgestützt zu werden, wobei die zweite Seite nicht abgestützt wird, oder die Oberseite (65) dazu eingerichtet ist, abgestützt zu werden, wobei die Unterseite (67) nicht abgestützt wird; wobei der dritte Seitenflächenbereich konkav ist und zu einer gewünschten konvexen Fläche (70a) der Schaufeln passt und der vierte Seitenflächenbereich konvex ist und zu einer gewünschten konkaven Fläche (70b) der Schaufeln passt;
und die Unterseite in der Form zu einer gewünschten Fläche einer Nabe an einem Schaufelfußbereich des Werkstücks passt; und
Vorrücken des Werkzeugs entlang eines Radius des Werkstücks, um einen Spalt zwischen angrenzenden Schaufeln auszubilden und gleichzeitig die konkaven und konvexen Flächen der jeweiligen Schaufeln auszubilden.

## Revendications

1. Procédé de formation d'un ensemble radial de lames chevauchantes (72) comprenant :
une première étape consistant à faire avancer un outil (6) vers une pièce à travailler (16) dans une direction orientée vers la face (20) de la pièce à travailler pour enlever de la matière de ladite pièce à travailler en induisant un changement d'état de la matière par la proximité dudit outil pour produire un disque à lames (24) partiellement fini ; et
une seconde étape consistant à enlever davantage de matière de ladite pièce à travailler pour finir lesdites lames, cet enlèvement étant également effectué par un changement d'état de la matière induit par la proximité d'un second outil d'avancement (60), ledit second outil d'avancement comprenant :
un premier côté (62) opposé à un deuxième côté (64) et des régions de surface de troisième (66) et de quatrième (68) côté ; et une partie supérieure (65) et une partie inférieure (67) : soit ledit premier côté étant conçu pour être supporté alors que ledit deuxième côté est non supporté, soit ladite partie supérieure (65) étant conçue pour être supportée alors que ladite partie inférieure (67) est non supportée ; ladite région de surface de troisième côté étant concave et correspondant à une face convexe (70a) souhaitée des lames et ladite région de surface de quatrième côté étant convexe et correspondant à une face concave (70b) souhaitée des lames ; et ladite partie inférieure correspondant en forme à une surface souhaitée d'un moyeu au niveau d'une région de pied de lame de la pièce à travailler,
ladite seconde étape comprenant les étapes consistant à :
usiner la face convexe (70a) d'une lame, alors que ledit second outil d'avancement est avancé radialement vers le disque à lames partiellement fini dans un espace entre les lames respectives ;
faire tourner le disque légèrement sur son axe ; et
usiner la face concave (70b) d'une lame adjacente lorsque ledit second outil est retiré.

2. Procédé de formation d'un ensemble radial de lames chevauchantes (72) dans une pièce à travailler (16) comprenant les étapes consistant à :
fournir un outil (60) comprenant :
un premier côté (62) opposé à un deuxième côté (64) et des régions de surface de troisième (66) et de quatrième (68) côté ; et une partie supérieure (65) et une partie inférieure (67) : soit ledit premier côté étant conçu pour être supporté alors que ledit deuxième côté est non supporté, soit ladite partie supérieure (65) étant conçue pour être supportée alors que ladite partie inférieure (67) est non supportée ; ladite région de surface de troisième côté étant concave et correspondant à une face convexe (70a) souhaitée des lames et ladite région de surface de quatrième côté étant convexe et correspondant à une face concave (70b) souhaitée des lames ; et ladite partie inférieure correspondant en forme à une surface souhaitée d'un moyeu au niveau d'une région de pied de lame de la pièce à travailler ; et
faire avancer l'outil le long d'un rayon de ladite pièce à travailler pour former un espace entre des lames adjacentes et former simultanément les faces concave et convexe des lames respectives.
